(19) Europäisches Patentamt
European Patent Office
Office européen des brevets

(11) Veröffentlichungsnummer: **0 238 841 B1**

# (12) EUROPÄISCHE PATENTSCHRIFT

(45) Veröffentlichungstag der Patentschrift: **06.11.91**

(51) Int. Cl.⁵: **H04Q 3/545**, G06F 11/20

(21) Anmeldenummer: **87102239.8**

(22) Anmeldetag: **17.02.87**

(54) **Fehlergesicherte, hochverfügbare Multiprozessor-Zentralsteuereinheit eines Vermittlungssystemes und Verfahren zum Speicherkonfigurationsbetrieb dieser Zentralsteuereinheit.**

(30) Priorität: **12.03.86 DE 3608245**
**24.07.86 DE 3625036**

(43) Veröffentlichungstag der Anmeldung:
**30.09.87 Patentblatt 87/40**

(45) Bekanntmachung des Hinweises auf die
Patenterteilung:
**06.11.91 Patentblatt 91/45**

(84) Benannte Vertragsstaaten:
**AT BE CH DE FR GB GR IT LI NL SE**

(56) Entgegenhaltungen:
**DE-A- 3 334 773**
**FR-A- 2 232 256**
**US-A- 4 371 754**

**IBM TECHNICAL DISCLOSURE BULLETIN,**
**Band 10, Nr. 8, Januar 1968, Seiten**
**1098-1100, New York, US; N.I. HANSON et al.:**
**"Data processing unit"**

(73) Patentinhaber: **SIEMENS AKTIENGESELL-
SCHAFT**
**Wittelsbacherplatz 2**
**W-8000 München 2(DE)**

(72) Erfinder: **Bitzinger, Rudolf, Dipl.-Ing.**
**Lechbruckerstrasse 11**
**W-8000 München 71(DE)**
Erfinder: **Engl, Walter, Dipl.-Ing.**
**Am Kellerberg 4**
**W-8152 Feldkirchen(DE)**
Erfinder: **Humml, Siegfried**
**An der Freiheit 130**
**W-8122 Penzberg(DE)**
Erfinder: **Schreier, Klaus, Dipl.-Ing.**
**Nonnenwaldstrasse 8a**
**W-8122 Penzberg(DE)**

## Beschreibung

Die Erfindung betrifft eine Weiterentwicklung der im Oberbegriff des Patentanspruches 1 definierten speziellen Multiprozessor-Zentralsteuereinheit und die Weiterbildung eines dafür optimierten Speicherkonfigurationsverfahrens. Die Erfindung geht dabei von der deutschen Patentanmeldung
DE-A-33 34 773
aus. Die dort beschriebene EDC-Code-Fehlersicherung eines Speicherblockes kann hierbei besonders zuverlässig z.B. gemäß der deutschen Patentanmeldung
DE-A-33 19 710
durchgeführt werden, indem dann auch die Adresse des Speicherplatzes vom EDC-Code miterfaßt wird.

Eine solche Zentralsteuereinheit soll extrem fehlertolerant sein, d.h. auftretende Fehler sollen möglichst rasch erkannt und fehlerhafte oder ausreichend fehlerverdächtige Organe des zentralen Speichers möglichst rasch eliminiert werden, bevor aus dem Fehler weitere Fehler entstehen, die den Betrieb des Vermittlungssystemes beeinträchtigen könnten. Daher sind bei dieser Zentralsteuereinheit die Steuereinheiten der Speicherblöcke - normalerweise auch das Bussystem und die zentralen Prozessoren - jeweils für sich gedoppelt und fehlergesichert - abgesehen von einem evtl. tolerierten gewissen Schlupf - mikrosynchron parallel betrieben.

Außerdem soll eine solche Zentralsteuereinheit eine extrem hohe Verfügbarkeit aufweisen, d.h. sie soll möglichst höchstens während weniger Sekunden oder Minuten pro Jahr -trotz ununterbrochenen Betriebes - irgendwelche gravierende Störungen aufweisen. Auch der zentrale Hauptspeicher der Zentralsteuereinheit soll also möglichst nie einen völligen Zusammenbruch des Vermittlungsbetriebes auslösen. Auch bei Ausfall und Abtrennen eines - oft auch diverser -der Organe des zentralen Speichers soll daher der Vermittlungsbetrieb weiterhin möglichst fehlertolerant aufrechterhalten werden können.

Die Aufgabe der Erfindung,
* die Zuverlässigkeit des Speicherbetriebes des zentralen Hauptspeichers der Zentralsteuereinheit weiter zu erhöhen,
* also vor allem seine Fehlertoleranz und seine Verfügbarkeit weiter zu erhöhen,
* um die Zuverlässigkeit des Vermittlungsbetriebes weiter zu erhöhen,
wird durch die im Patentanspruch 1 genannten Maßnahmen gelöst.

Durch die Erfindung wird also der zentrale Speicher des Vermittlungssystemes besonders rasch und besonders fehlertolerant, also extrem zuverlässig, durch gedoppelte speichereigene Speicherkonfigurations-Prozessoren gesteuert, die z.B. mittels käuflicher 8-Bit- oder z.B. auch 32-Bit-Prozessorchips gebildet werden können und die durch besondere Schaltung und besonderen Betrieb besonders rasch und vor allem zuverlässig arbeiten. Dadurch werden für die Speicherkonfiguration in der Regel nicht mehr einer der oder mehrere der zentralen Prozessoren der Zentralsteuereinheit benötigt und dementsprechend auch nicht mehr das zentrale Bussystem durch Zugriffe auf den zentralen Speicher zur Konfiguration dieses zentralen Speichers belastet. Die zentralen Prozessoren können sich dann voll deren eigenen Aufgaben widmen und sind dementsprechend noch mehr als bisher für ihre eigenen Aufgaben verfügbar. Dadurch wird also auch die Verfügbarkeit des Bussystemes, überhaupt der ganzen Zentralsteuereinheit, weiter vergrößert.

Die im unabhängigen Verfahrensanspruch 2 genannten Maßnahmen gestatten, die Zuverlässigkeit des Speicherbetriebes zu erhöhen. Anspruch 2 beschreibt Maßnahmen die gestatten, vollautomatisch die Speicherkonfiguration-einschließlich des Refreshes- auch bei Störungen im Betriebeines Speicherblockes durchzuführen.

Die in den Unteransprüchen genannten zusätzlichen Maßnahmen gestatten, die Zuverlässigkeit des Speicherbetriebes weiter zu erhöhen. Es gestatten nämlich die Maßnahmen gemäß Patentanspruch

3, die spätere Diagnose der Ursachen von aufgetretenen Fehlern zu erleichtern, so daß evtl. fällige Reparaturen gezielter durchgeführt werden können,

4 und 5, selbst bei Ausfall eines Speicherblockpaares einen noch möglichst zuverlässigen Weiterbetrieb des zentralen Speichers zu ermöglichen, selbst wenn gewisse dort gespeicherte Informationen dann verloren sein sollten,

6 und 7, selbst bei Ausfall eines der Speicherkonfigurations-Prozessoren eine zuverlässige Speichersteuerung aufrechtzuerhalten,

8, selbst bei Ausfall eines Speicherkonfigurations-Prozessorpaares eine zuverlässige Speicherverwaltung weiterhin aufrechtzuerhalten, sowie

9, die Zuverlässigkeit des zentralen Speichers weiter zu erhöhen.

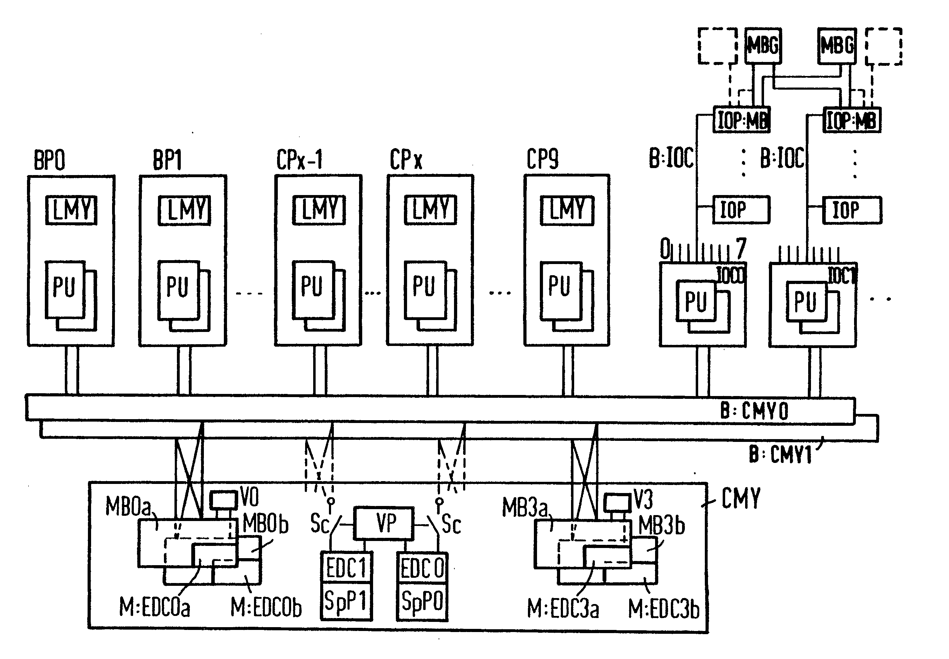

Die Erfindung, ihre Weiterbildungen und Vorteile werden anhand des in der Figur gezeigten Ausführungsbeispieles weiter erläutert.

Das in dieser Figur gezeigte Zentralsteuereinheit-Beispiel entspricht sehr weitgehend der Figur und der Beschreibung der bereits oben genannten deutschen Patentanmeldung
DE-A-33 34 773,
übrigens auch dem Zentralsteuereinheit-Beispiel, das - unter Betonung anderer Aufgaben bzw. Aspekte dieser Zentralsteuereinheit - in den weiteren deutschen Patentanmeldungen
DE-A-33 34 792,
DE-A-33 34 765,
DE-A-33 34 766,
DE-A-33 34 797,
DE-A-33 34 796, sowie
DE-A-33 19 710
beschrieben ist. Daher braucht hier der Aufbau und die Betriebsweise des in der Figur der vorliegenden Schrift gezeigten Zerntralsteuereinheits-Beispiels nicht mehr in allen Einzelheiten erläutert zu werden. Statt dessen genügt es, hier nur noch auf die speziellen Besonderheiten des erfindungsgemäßen Aufbaus und des dafür optimierten Speicherkonfigurationsverfahrens einzugehen.

Die in der Figur der vorliegenden Schrift gezeigte Zentralsteuereinheit weist als Besonderheit im zentralen Hauptspeicher CMY vor allem das extrem fehlergesichert betriebene Speicherkonfigurations-Prozessorpaar SpP0/SpP1 auf. Im gezeigten Beispiel weisen dessen Prozessoren jeweils eigene Prozessor-EDC-Schaltungen EDC0/EDC1 sowie zusätzlich eine eigene Prozessor-Vergleicherschaltung VP zum Vergleichen der Maschinenbefehle und/oder der Daten der beiden Speicherkonfigurations-Prozessoren auf.

Ferner weist diese Figur noch vier Speicherblockpaare MB0a/MB0b ....MB3a/MB3b im zentralen Hauptspeicher CMY auf, deren Speichersteuereinheiten - abgesehen von einem evtl. tolerierten gewissen Schlupf - mikrosynchron parallel betrieben sind. Diese Speicherblöcke sind im gezeigten Beispiel mittels jeweils speicherblockeigener Speicher-EDC-Schaltungen M:EDC0a/ M:EDC0b .....M:EDC3a/M:EDC3b extrem fehlergesichert betrieben, wobei zusätzlich noch - trotz eventueller EDC-Korrekturen - die Adressen und/oder die einzuschreibenden und/oder die gelesenen Informationen jeweils mittels speicherblockpaareigener Speicher-Vergleicherschaltungen V0....V3 miteinander verglichen werden.

Die Figur zeigt also eine besonders stark fehlergesicherte, hochverfügbare Multiprozessor-Zentralsteuereinheit eines Vermittlungssystemes - z.B. eines Fernsprechvermittlungssystemes -, mit vier in Normalbetriebszeiten in sich fehlergesichert - abgesehen von einem evtl. tolerierten gewissen Schlupf - mikrosynchron parallel betriebenen Speicherblockpaaren MB0a/MB0b...MB3a/MB3b, die also jeweils aus einem ersten (a) und einen zweiten (b) Speicherblock bestehen. Diese Speicherblockpaare MB sind an das zentrale, in sich ebenfalls gedoppelte, - abgesehen von dem evtl. tolerierten Schlupf - fehlergesichert mikrosynchron betriebene Bussystem B:CMY0/B:CMY1 angeschlossen und bilden die Hauptbestandteile des zentralen Hauptspeichers CMY. Außerdem ist eine Vielzahl der jeweils unterschiedliche momentane Vermittlungsaufträge bearbeitenden zentralen Prozessoren BP0, BP1, CP0 .... CP9, IOC0, IOC1.... parallel an das Bussystem B:CMY angeschlossen, wobei übrigens auch diese zentralen Prozessoren BP, CP, IOC in sich gedoppelt sind und fehlergesichert - auch hier abgesehen von einem evtl. tolerierten gewissen Schlupf - mikrosynchron parallel betrieben werden.

Zumindest eine große Anzahl der zentralen Prozessoren BP, CP, IOC hat, z.B. wegen absichtlicher Begrenzung der von dem betreffenden Prozessor jeweils absendbaren Speicheradressen, normalerweise auf jeweils nur einen Teil der Speicherplätze des zentralen Speichers CMY, also z.B. nur auf einen der Speicherabschnitte in jedem der beiden Speicherblöcke von jeweils zumindest einem der Speicherblockpaare, z.B. MB3a/MB3b, für einen Lese- und/oder Schreibbetrieb Zugriff, wobei normalerweise in den betreffenden adressierbaren Speicherabschnitten der beiden Speicherblöcke eines Speicherblockpaares identische Informationen gespeichert werden.

In Sonderbetriebszeiten eines Speicherblockpaares, z.B. des Speicherblockpaares MB3a/MB3b, - nämlich nach einem durch eine seiner Speicher-EDC-Schaltungen, also z.B. M:EDC3b, festgestellten, nicht mehr ohne weiteres korrigierbaren Mehrfachfehler in dem einen, genannt zweiten, Speicherblock, hier also MB3b, wird gemäß der oben genannten deutschen Patentanmeldung
DE-A-33 34 773
durch eine automatische Speicherkonfiguration der stark fehlerverdächtige zweite Speicherblock MB3b vom Bussystem B:CMY0/B:CMY1 abgetrennt, wobei ab jetzt der andere, erste Speicherblock, dann also MB3a, dieses Speicherblockpaares alleine den Lese- und/oder Schreibbetrieb mit den betreffenden zentralen Prozessoren BP, CP, IOC durchführt.

In dieser Sonderbetriebszeit werden - entweder sofort nach dem Abtrennen des zweiten Speicherblockes MB3b vollautomatisch, und/oder nach dessen Reparatur durch einen Anstoß automatisch, nach und nach die in dem zweiten Speicherblock MB3b gespeicherten Informationen durch einen Neuladeversuch mittels eines - z.B. im Speicherkonfigurations-Prozessorpaar SpP0/SpP1 oder im Bussystem B:CMY0/B:CMY1 enthaltenen - Adressengenerators korrigiert. Das Neuladen wird durch Lesen aus dem ersten Speicherblock MB3a dieses Speicherblockpaares MB3a/MB3b und durch Schreiben der aus dem ersten Speicherblock MB3a gelesenen Informationen in diesen zweiten Speicherblock MB3b erreicht, soweit dann der zweite Speicherblock MB3b wieder fehlerfrei arbeitet, wobei während dieses Neuladens des zweiten Speicherblockes während eines gleichzeitig durchgeführten Schreibbetriebes des ersten Speicherblockes MB3a, dieselbe, in den ersten Speicherblock MB3a eingeschriebene Information sofort unter derselben Adresse auch in den zweiten Speicherblock MB3b geschrieben wird. Durch einen während des Neuladeversuches oder nach dem Neuladeversuch durchgeführten Probelauf des betreffenden Speicherblockpaares MB3a/MB3b kann mittels seiner Speicher-EDC-Schaltungen M:EDC3a/M:EDC3b sowie mittels seiner Speicher-Vergleicherschaltung V3 geprüft werden, ob die Neuladung glückte, oder eine (nochmalige) Reparatur und ein nochmaliger Neuladeversuch nötig ist.

Das speichereigene, mikrosynchron parallel betriebene, zur automatischen Speicherkonfiguration dienende Speicherkonfigurations-Prozessorpaar SpP0/SpP1 ist also direkt an den zentralen Hauptspeicher CMY angeschlossen und vielleicht auch räumlich direkt dort - zur Verringerung der Signallaufzeiten auf den Leitungen - untergebracht und wirkt also direkt, statt über das zentrale Bussystem B:CMY0/B:CMY1 auf den zentralen Hauptspeicher CMY und dort vor allem auch direkt auf die Steuerung der Speicherblöcke MB0a....MB3b. Dementsprechend werden das zentrale Bussystem B:CMY0/B:CMY1 und die zentralen Prozessoren BP, CP, IOC von Speicherkonfigurationsaufgaben entlastet. Der Betrieb des Speicherkonfigurations-Prozessorpaares SpP0/ SpP1 wird ebenfalls für sich mittels einer eigenen Prozessor-EDC-Schaltung EDCO, EDC1 oder Prozessor-Paritybit-Schaltung überprüft und überdies trotz dieser eigenen EDC-Code- oder Paritybit-Überprüfung zusätzlich mittels der prozessoreigenen Prozessor-Vergleicherschaltung VP laufend überprüft. Dieses speichereigene fehlergesicherte Speicherkonfigurations-Prozessorpaar Sp0/ SpP1 - oder eine Vielzahl solcher speichereigenen Paare - erhöht wegen seines extrem fehlergesicherten Betriebes die Zuverlässigkeit des Betriebes des zentralen Hauptspeichers entsprechend extrem.

Bevorzugt steuert hierbei dieses Speicherkonfigurations-Prozessorpaar SpP0/SpP1 - oder die Speicherkonfigurations-Prozessorpaare -, jedenfalls solange das betreffende Paar jeweils gemäß seiner eigenen Überprüfungen störungsfrei arbeitet, die rechtzeitige Durchführung aller Refreshzyklen für die zentralen Speicherblöcke MB. Außerdem steuert dieses Paar direkt oder indirekt während der Refreshzyklen die Prüfungen und Korrekturen der gespeicherten, während eines Refreshzyklusses jeweils gelesenen Informationen - bevorzugt mittels der speichereigenen Speicher-EDC-Schaltungen M:EDC0a.... M:EDC3b. Vor allem steuert es, sobald durch eine der Speicher-EDC-Schaltungen, z.B. M:EDC3b, eines Speicherblockes ein nicht mehr ohne weiteres korrigierbarer Mehrfachfehler festgestellt wurde, die Abtrennung dieses Speicherblockes MB3b vom Bussystem B:CMY0/B:CMY1 sowie den anschließenden Sonderbetrieb für Neuladeversuche zum Neuladen dieses abgetrennten Speicherblockes MB3b. Ferner steuert es nach dem erfolgreichen Abschluß des Neuladens das Wiederanschalten des betreffenden Speicherblockes MB3b an das Bussystem B:CMY0/B:CMY1 und den Übergang zu dem mikrosynchronen Parallelbetrieb beider Speicherblöcke des betreffenden Speicherblockpaares MB3a/MB3b, also den Übergang zur Normalbetriebszeit.

Die Fehlerdiagnose und die gezielte, evtl. fällige Reparatur des zentralen Speichers CMY, z.B. einzelner Speicherblöcke MB und/oder bestimmter ihrer EDC-Schaltungen M:EDC oder Vergleicherschaltungen V/VP, wird z.B. dadurch erleichtert, daß mindestens einer der Speicherkonfigurations-Prozessoren SpP0/SpP1 in einem gesonderten Register oder vielleicht auch in einem als Register verwendeten besonderen Speicherbereich, z.B. in Abschnitten von MB0a/MB0b, jeweils einen Hinweis auf den oder auf die der Abtrennung vom Bussystem B:CMY0/ B:CMY1 zugrunde liegenden Fehler protokolliert, - und/oder einen Hinweis auf das betreffende abgetrennte Organ, also z.B. auf einen bestimmten Speicherblock wie z.B. MB3b, evtl. auch einen mehr oder weniger präzisen Hinweis auf ein Kommando, bei dessen Bearbeitung der betreffende Fehler auftrat.

Wenn sich beim Betrieb, z.B. beim Lesen, z.B. schon beim Refresh, die Gefahr zeigt, daß ein Organ des zentralen Speichers CMY, also z.B. ein Speicherblockpaar wie MB3a/MB3b, in nicht mehr rettbarer Weise defekt ist,
- wenn nämlich z.B. die in den beiden Speicherblöcken dieses Speicherblockpaares gespeicherten Informationen -trotz EDC-Überprüfung und trotz eventueller EDC-Korrektur - zusätzlich mittels ihrer Speicher-Vergleicherschaltung, z.B. V3, miteinander verglichen wurden und dann Ungleichheiten zwischen den verglichenen Informationen blieben,
dann kann zunächst das betreffende zugrunde liegende Kommando,
- also z.B. das Lesen,
bevorzugt wieder mittels des Speicherkonfigurations-Prozessorpaares SpP0/SpP1, wiederholt werden. Oft zeigt sich dann, daß der Fehler plötzlich wieder verschwunden ist, so daß zunächst der normale Betrieb wieder fortgesetzt werden kann. Nach einem wiederholten Auftreten der Ungleichheit kann aber ein Alarm ausgelöst werden, z.B. in der Weise, daß das betreffende Organ,
- z.B. das betreffende Speicherblockpaar MBx,
nun endgültig vom zentralen Bussystem B:CMY0/B:CMY1, bzw. intern im zentralen Speicher von seiner Speicherumgebung, abgetrennt wird und nach Möglichkeit sofort - bevorzugt wieder mit Hilfe des Speicherkonfigurations-Prozessorpaares - durch ein Ersatz-Organ,

- also z.B. durch ein Ersatz-Speicherblockpaar, ersetzt wird, - und, wenn es sich hierbei um ein Ersatz-Speicherblockpaar handelte, nach Möglichkeit und nach Bedarf neugeladen wird.

Selbst bei Ausfall eines der Speicherkonfigurations-Prozessoren kann der erfindungsgemäß betriebene zentrale Hauptspeicher CMY weiterhin - oft ohne nennenswerte Einbuße - voll verfügbar bleiben: Nach einem durch eine der Prozessor-EDC-Schaltungen, z.B. EDC1, festgestellten, von ihr nicht mehr ohne weiteres korrigierbaren Mehrfachfehler im betreffenden Speicherkonfigurations-Prozessor SpP, kann nämlich der zugehörige Speicherkonfigurations-Prozessor, z.B. SpP1, abgeschaltet werden und der andere Speicherkonfiguratons-Prozessor SpP0 alleine die Speicherkonfiguration übernehmen.

Nach einem durch eine - oder beide - der Prozessor-EDC-Schaltungen EDC0/EDC1 festgestellten, nicht mehr ohne weiteres korrigierbaren Mehrfachfehler kann außerdem das betreffende Speicherkonfigurations-Prozessorpaar SpP0/SpP1 auch abgeschaltet und sofort voll wirksam durch die Einschaltung eines Ersatz-Prozessorpaares ersetzt werden. Auch nach einem durch eine Prozessor-Vergleicherschaltung VP festgestellten - z.B. trotz Korrektur durch eine zugehörige Prozessor-EDC-Schaltung, z.B. EDC1, auftretenden -Fehler kann das ganze zugehörige Speicherkonfigurations-Prozessorpaar SpP0/SpP1 abgeschaltet und sofort voll wirksam durch Einschalten eines Ersatz-Speicherkonfigurations-Prozessorpaares ersetzt werden. Hierbei kann diese Steuerung des Ersetzens auch vom hierbei abgetrennten Speicherkonfigurations-Prozessorpaar selbst veranlaßt worden sein.

Es ist günstig, von Zeit zu Zeit auch die zur Fehlererkennung dienenden Schaltungen des zentralen Speichers, also z.B. die verschiedenen EDC-Schaltungen und Vergleicherschaltungen auf Fehlerfreiheit ihres Betriebes zu prüfen. Dazu kann von dem Speicherkonfigurations-Prozessorpaar SpP0/SpP1 auch ein hierfür bereitgestelltes Sonderprüfprogramm aufgerufen und abgewickelt werden, und bei Bedarf die betreffende fehlerhafte Schaltung EDC/V durch eine Ersatzschaltung ersetzt werden.

**Patentansprüche**

1. Fehlergesicherte, hochverfügbare Multiprozessor-Zentralsteuereinheit eines Vermittlungssystemes - z.B. eines Fernsprechvermittlungssystemes -, in welcher
   * ein zentraler Hauptspeicher(CMY) in sich gedoppelt ist,
      # nämlich ein oder mehrere, in Normalbetriebszeiten -abgesehen von einem evtl. tolerierten gewissen Schlupf - in sich mikrosynchron parallel betriebene Speicherblockpaare(MB3a/MB3b) enthält,
      # also mindestens einen ersten(MB3a) und einen bezogen auf den ersten(MB3a) - abgesehen von dem evtl. tolerierten Schlupf - mikrosynchron parallel betriebenen zweiten Speicherblock(MB3b) enthält,
   * an ein zentrales Bussystem(B:CMY0, B:CMY1) der zentrale Hauptspeicher-(CMY), also das Speicherblockpaar-(MB0a/MB0b) oder die Speicherblockpaare(MB0a/MB0b, ... MB3a/MB3b), sowie die Vielzahl von jeweils unterschiedliche momentane Vermittlungsaufträge bearbeitenden zentralen Prozessoren(BP0, BP1, CP0 .... CP9, IOC0, IOC1, ...) parallel angeschlossen sind,
   * die in den Speicherblöcken jedes Speicherblockpaares(z.B. MB3a/MB3b) parallel gespeicherten Informationen in jedem Speicherblock für sich nach einem EDC-Code durch den einzelnen Speicherblöcken individuell zugeordnete Speicher-EDC-Schaltungen-(M:EDC0a.....M:EDC3b) fehlergesichert gespeichert werden,
   * zumindest eine große Anzahl der zentralen Prozessoren(BP0 .....IOC1.....) auf jeweils zumindest einen der - normalerweise identische Informationen speichernden - Speicherabschnitte in jedem der beiden Speicherblöcke von zumindest einem der Speicherblockpaare(z.B. MB3a/MB3b) für einen Lese- und/oder Schreibbetrieb Zugriff hat, und
   * in Sonderbetriebszeiten eines Speicherblockpaares(z.B. MB3a/MB3b),
      # nämlich nach einem durch eine der Speicher-EDC-Schaltungen(z.B. M:EDC3b) festgestellten, durch sie nicht mehr ohne weiteres korrigierbaren Mehrfachfehler in einem, genannt zweiten, Speicherblock(z.B. MB3b) eines solchen Speicherblockpaares-(MB3a/MB3b),
      - durch eine automatische Speicherkonfiguration der zweite Speicherblock(MB3b) vom Bussystem(B:CMY0/B:CMY1) abgetrennt wird, und dann der andere, erste Speicherblock(MB3a) dieses Speicherblockpaares-(MB3a/MB3b) alleine den Lese- und/oder Schreibbetrieb mit den betreffenden zentralen Prozessoren(BP0.....IOC1...) durchführt,

- während der Abgetrenntheit nach und nach die in dem zweiten Speicherblock(MB3b) gespeicherten Informationen durch einen

# evtl. bereits sofort nach dem Abtrennen des zweiten Speicherblockes(MB3b) vollautomatisch, zumindest aber später nach einer Reparatur des zweiten Speicherblockes(MB3b) nach einem Anstoß automatisch durchgeführten Neuladeversuch mittels eines Adressengenerators,

# nämlich durch Lesen aus dem ersten Speicherblock(MB3a) dieses Speicherblockpaares(MB3a/MB3b) und durch Schreiben der aus dem ersten Speicherblock(MB3a) gelesenen Informationen in diesen zweiten Speicherblock(MB3b), soweit dann der zweite Speicherblock(MB3b) wieder fehlerfrei arbeitet, korrigiert werden,

- wobei, falls während dieses nach und nach durchgeführten Neuladens des zweiten Speicherblockes(MB3b) gleichzeitig ein Schreibbetrieb des ersten Speicherblockes(MB3a) dazwischen eingeschoben durchgeführt wird, dieselbe, in den ersten Speicherblock(MB3a) eingeschriebene Information sofort unter derselben Adresse auch in den zweiten Speicherblock(MB3b) geschrieben wird,

**dadurch gekennzeichnet**, daß

\* zur automatischen Speicherkonfiguration mindestens ein einziges speichereigenes, jeweils - ebenfalls abgesehen von einem evtl. tolerierten gewissen Schlupf - mikrosynchron parallel betriebenes Speicherkonfigurations-Prozessorpaar-(SpP0/ SpP1),

- dessen Betrieb auch für sich mittels einer eigenen Prozessor-EDC-Code- oder Prozessor-Paritybit-Schaltung (EDC0, EDC1) überprüft wird und

- dessen Betrieb trotz dieser eigenen EDC-Code- oder Paritybit-Prüfung zusätzlich mittels einer

# die individuellen Maschinenbefehle und/oder Verarbeitungsergebnisse der zugehörenden Speicherkonfigurations-Prozessoren(SpP0/SpP1) vergleichenden Prozessor-Vergleicherschaltung(VP) laufend überprüft wird, direkt, statt über das zentrale Bussystem(B:CMY0/B:CMY1), an den zentralen Hauptspeicher(CMY) angeschlossen ist.

2. Verfahren zum Speicherkonfigurationsbetrieb für eine Zentralsteuereinheit gemäß Patentanspruch 1, **dadurch gekennzeichnet**, daß

\* das Speicherkonfigurations-Prozessorpaar(SpP0/SpP1) -oder die Speicherkonfigurations-Prozessorpaare - jedenfalls solange das betreffende Speicherkonfigurations-Prozessorpaar-(SpP0/SpP1) jeweils gemäß seiner eigenen Überprüfungen(VP, EDC0/EDC1) störungsfrei arbeitet,

- die Refreshzyklen der Speicherblöcke(MB0a...MB3b) veranlaßt,

- während der Refreshzyklen Prüfungen und Korrekturen der gespeicherten, während des Refreshzyklusses gelesenen Informationen mittels des EDC-Code(M:EDC0a.... M:EDC3b) gestattet und/oder durchführt,

- nach einem durch eine der Speicher-EDC-Schaltungen(z.B. M:EDC3b) eines Speicherblockes(dann MB3b) festgestellten, von ihr nicht mehr ohne weiteres korrigierbaren Mehrfachfehler in dem betreffenden Speicherblock-(MB3b), diesen Speicherblock(MB3b) vom Bussystem(B:CMY0/B:CMY1) abtrennt und den Sonderbetrieb für Neuladeversuche zum Neuladen dieses abgetrennten Speicherblockes(MB3b) veranlaßt und/oder durchführt, und

- nach Abschluß des Neuladens den betreffenden Speicherblock(MB3b) wieder an das Bussystem-(B:CMY0/B:CMY1) anschaltet und den mikrosynchronen Parallelbetrieb beider Speicherblöcke des betreffenden Speicherblockpaares (MB3a/MB3b), also den Übergang zur Normalbetriebszeit, veranlaßt und/oder durchführt.

3. Verfahren nach Patentanspruch 2, **dadurch gekennzeichnet**, daß

\* mindestens einer der Speicherkonfigurations-Prozessoren (SpP0/SpP1) in einem gesonderten Speicherbereich(z.B. in MB0a/MB0b) jeweils einen Hinweis

- auf den der Abtrennung vom Bussystem(B:CMY0/B:CMY1) zugrunde liegenden Fehler,

- sowie auf den abgetrennten Speicherblock(MB3b),
- evtl. auch mehr oder weniger präzise auf die Adresse, unter der der betreffende Fehler festgestellt wurde, protokolliert.

4. Verfahren nach Patentanspruch 2 oder 3,
**dadurch gekennzeichnet, daß**
in Normalbetriebszeiten zumindest beim Lesen oder Refresh,
* die in den beiden Speicherblöcken eines Speicherblockpaares(z.B. MB3a/MB3b) gespeicherten Informationen, trotz der beim Lesen und/oder Refresh durchgeführten EDC-Überprüfung, zusätzlich in einer Speicher-Vergleicherschaltung-(V0.... V3) miteinander verglichen werden und
* bei Ungleichheit der verglichenen Informationen der betreffende Speichervorgang, also z.B. das Lesen, wiederholt wird.

5. Verfahren nach Patentanspruch 4,
**dadurch gekennzeichnet, daß**
nach einem wiederholten Auftreten der Ungleichheit
* das betreffende Speicherkonfigurations-Prozessorpaar (SpP0/SpP1) einen Alarm auslöst, z.B. das betreffende Speicherblockpaar vom zentralen Bussystem-(B:CMY0/B:CMY1) abtrennt und durch ein Ersatz-Speicherblockpaar ersetzt.

6. Verfahren nach einem der Patentansprüche 2 bis 5,
**dadurch gekennzeichnet, daß**
nach einem durch eine der Prozessor-EDC-Schaltungen(z.B. EDC1) oder Prozessor-Paritybit-Schaltung festgestellten, von ihr nicht mehr ohne weiteres korrigierbaren Fehler,
* der zugehörende Speicherkonfigurations-Prozessor(z.B. SpP1) abgeschaltet wird und
* der andere Speicherkonfigurations-Prozessor(SpP0) des betreffenden Speicherkonfigurations-Prozessorpaares-(SpP0/SpP1) alleine die Speicherkonfiguration übernimmt.

7. Verfahren nach einem der Patentansprüche 2 bis 5,
**dadurch gekennzeichnet, daß**
nach einem durch eine der Prozessor-EDC-Schaltungen(z.B. EDC1) oder Prozessor-Paritybit-Schaltung festgestellten, von ihr nicht mehr ohne weiteres korrigierbaren Fehler,
* das betreffende Speicherkonfigurations-Prozessorpaar (SpP0/SpP1) abgeschaltet und durch die Einschaltung eines Ersatz-Speicherkonfigurations-Prozessorpaares ersetzt wird.

8. Verfahren nach einem der Patentansprüche 2 bis 7,
**dadurch gekennzeichnet, daß**
nach einem durch eine Prozessor-Vergleicherschaltung(VP)
- evtl. trotz Korrektur durch eine Prozessor-EDC-Schaltung (z.B. EDC1), die zu diesem Speicherkonfigurations-Prozessorpaar(SpP0/SpP1) gehört, festgestellten Fehler,
* das zugehörende Speicherkonfigurations-Prozessorpaar (SpP0/SpP1, z.B. mittels Sc) abgeschaltet und durch Einschalten eines Ersatz-Speicherkonfigurations-Prozessorpaares ersetzt wird.

9. Verfahren nach einem der Patentansprüche 2 bis 8,
**dadurch gekennzeichnet, daß**
* das betreffende Speicherkonfigurations-Prozessorpaar (SpP0/SpP1) zusätzlich in zeitlichen Abständen den Abruf und die Abarbeitung eines in einem besonderen Speicherbereich(z.B. in MB0a/MB0b) gespeicherten Sonderprüfprogrammes für einen Test von zur Fehlererkennung dienenden Schaltungen veranlaßt und/oder durchführt,
- z.B. für einen Test von den Speicher-EDC-Schaltungen (M:EDC) und/oder den Prozessor-EDC-Schaltungen-(EDC0/EDC1) und/oder den Speicher-Vergleicherschaltungen(V0 ...V3) und/oder der Prozessor-Vergleicherschaltung(VP).

## Claims

1. Error-protected, high-availability multiprocessor central control unit of a switching system, for example of a telephone switching system, in which
* a central main memory (CMY) is intrinsically duplicated,
    # namely contains one or more memory block pairs (MB3a/MB3b) which are operated intrinsically parallel in microsynchronism during periods of normal operation, apart from a certain slip which may be tolerated,

# that is to say contains at least a first (MB3a) and a second memory block (MB3b) which are operated parallel in microsynchronism in relation to the first memory block (MB3a), apart from the slip that may be tolerated,

* the central main memory (CMY), that is to say the memory block pair (MB0a/MB0b) or the memory block pairs (MB0a/MB0b,...MB3a/MB3b), as well as the multiplicity of central processors (BP0, BP1, CP0 ... CP9, IOC0, IOC1, ...), processing different instantaneous switching tasks in each case, are connected in parallel to a central bus system (B:CMY0, B:CMY1),

* the information items stored in parallel in the memory blocks of each memory block pair (for example MB3a/MB3b) are stored in an intrinsically error-protected manner in each memory block, according to an EDC code, by the memory EDC circuits (M:EDC0a...M:EDC3b) individually assigned to the individual memory blocks,

* at least a large number of the central processors BP0.....IOC1.....) have access to in each case at least one of the memory segments - normally storing identical information items - in each of the two memory blocks of at least one of the memory block pairs (for example MB3a/MB3b) for a read and/or write operation, and

* during periods of special operation of a memory block pair (for example MB3a/MB3b),

# namely after a multiple error detected by one of the memory EDC circuits (for example M:EDC3b) but unable to be readily corrected by it, in a second, as it is referred to, memory block (MB3b) of such a memory block pair (MB3a/MB3b),

- the second memory block (MB3b) is disconnected from the bus system (B:CMY0/B:CMY1) by an automatic memory configuration, and then the other, first memory block (MB3a) of this memory block pair (MB3a/MB3b) executes the read and/or write operation with the respective central processors (BP0.....IOC1) alone,

- during the disconnection the information items stored in the second memory block (MB3b) are gradually corrected by a

# reload attempt by means of an address generator, possibly executed fully automatically immediately after the disconnection of the second memory block (MB3b), but at least executed automatically later, after a repair of the second memory block (MB3b) after triggering,

# namely by reading from the first memory block (MB3a) of this memory block pair (MB3a/MB3b) and by writing the information items read out of the first memory block (MB3a) into this second memory block (MB3b), insofar as the second memory block (MB3b) then functions without error again,

- in which, if during this gradually executed reloading of the second memory block (MB3b) a write operation of the first memory block (MB3a) is inserted in between and simultaneously executed, the same information written into the first memory block (MB3a) is immediately written also into the second memory block (MB3b), under the same address,

characterised in that

* for the automatic memory configuration, there is connected directly to the central main memory (CMY), instead of via the central bus system (B:CMY0/B:CMY1), at least one single memory-specific memory configuration processor pair (SpP0/SpP1) operated parallel in microsynchronism in each case - likewise apart from a certain slip which may be tolerated,

- the operation of which is also intrinsically checked by means of its own processor EDC code circuit or processor parity bit circuit (EDC0, EDC1), and

- the operation of which, despite its aforesaid own EDC code check or parity bit check, is additionally continuously checked by means of a processor comparator circuit (VP),

# which compares the individual machine instructions and/or processing results of the associated memory configuration processors (SpP0/SpP1).

2. Method for the memory configuration operation for a central control unit in accordance with Patent Claim 1, characterised in that
* the memory configuration processor pair (SpP0/SpP1), or the memory configuration processor pairs, at least as long as the respective memory configuration processor pair (SpP0/SpP1) is functioning error-free in each case according to its own checks (VP, EDC0/EDC1),
  - initiates the refresh cycles of the memory blocks (MB0a...MB3b),
  - during the refresh cycles permits and/or executes by means of the EDC code (M:EDC0a....M:EDC3b) checks and corrections of the stored information items read during the refresh cycle,
  - after a multiple error, detected by one of the memory EDC circuits (for example M:EDC3b) of a memory block (then MB3b) but unable to be readily corrected by it, in the respective memory block (MB3b), disconnects said memory block (MB3b) from the bus system (B:CMY0/B:CMY1) and triggers and/or executes the special operation for reload attempts for reloading said disconnected memory block (MB3b), and
  - after completion of the reloading, reconnects the respective memory block (MB3b) to the bus system (B:CMY0/B:CMY1) and triggers and/or executes the microsynchronous parallel operation of both memory blocks of the respective memory block pair (MB3a/MB3b), that is to say the transition to the normal period of operation.

3. Method according to Patent Claim 2, characterised in that
* at least one of the memory configuration processors (SpP0/SpP1) logs in a separate memory area (for example in MB0a/MB0b) in each case information
  - on the error causing the disconnection from the bus system (B:CMY0/B:CMY1),
  - as well as on the disconnected memory block (MB3b),
  - and possibly also, more or less precisely, on the address under which the respective error was detected.

4. Method according to Patent Claim 2 or 3, characterised in that, during periods of normal operation, at least during reading or refreshing,
* the information items stored in the two memory blocks of a memory block pair (for example MB3a/MB3b) are additionally compared with one another in a memory comparator circuit (V0....V3), despite the EDC check executed during reading and/or refreshing, and
* if the compared information items do not match, the respective memory operation, that is to say, for example, reading, is repeated.

5. Method according to Patent Claim 4, characterised in that after a repeated occurrence of the mismatch
* the respective memory configuration processor pair (SpP0/SpP1) triggers an alarm, for example disconnects the respective memory block pair from the central bus system (B:CMY0/B:CMY1) and replaces it by an alternate memory block pair.

6. Method according to one of Patent Claims 2 to 5, characterised in that after an error detected by one of the processor EDC circuits (for example EDC1) or processor parity bit circuit but unable to be readily corrected by it
* the associated memory configuration processor (for example SpP1) is disconnected, and
* the other memory configuration processor (SpP0) of the respective memory configuration processor pair (SpP0/SpP1) assumes the memory configuration alone.

7. Method according to one of Patent Claims 2 to 5, characterised in that after an error detected by one of the processor EDC circuits (for example EDC1) or processor parity bit circuit but unable to be readily corrected by it
* the respective memory configuration processor pair (SpP0/SpP1) is disconnected and is replaced by the connection of an alternate memory configuration processor pair.

8. Method according to one of Patent Claims 2 to 7, characterised in that after an error detected by a processor comparator circuit (VP)
  - possibly despite correction by a processor EDC circuit (for example EDC1) belonging to this memory configuration processor pair (SpP0/SpP1),
    * the associated memory configuration processor pair (SpP0/SpP1, for example by means of Sc) is disconnected and is replaced by connection of an alternate memory configuration processor pair.

9. Method according to one of Patent Claims 2 to 8, characterised in that

* the respective memory configuration processor pair (SpP0/SpP1) additionally triggers and/or executes at time intervals the calling and processing of a special test program stored in a separate memory area (for example in MB0a/MB0b) for a test of the circuits used for error detection,

    - for example for a test of the memory EDC circuits (M:EDC) and/or the processor EDC circuits (EDC0/EDC1) and/or the memory comparator circuits (V0...V3) and/or the processor comparator circuit (VP).

## Revendications

1. Unité de commande centrale à multiprocesseur, protégée contre les erreurs et présentant une grande disponibilité, d'un système de commutation -par exemple d'un système de commutation téléphonique-, dans laquelle

* une mémoire centrale principale (CMY) est doublée et

    # comporte pour préciser, un ou plusieurs couples (MB3a/MB3b) de blocs de mémoire fonctionnant en parallèle d'une manière en soi microsynchrone pendant des durées de fonctionnement normales -indépendamment d'un certain glissement éventuellement toléré-,

    # et comporte donc au moins un premier bloc de mémoire (MB3a) et un second bloc de mémoire (MB3b) fonctionnant en parallèle, d'une manière microsynchrone, avec le premier bloc de mémoire (MB3a) - indépendamment d'un glissement éventuellement toléré,

* la mémoire principale centrale (CMY), c'est-à-dire le couple (MB0a/MB0b) du bloc de mémoire ou les couples (MB0a/MB0b, ... MB3a/MB3b) de blocs de mémoire ainsi que la multiplicité des processeurs centraux (BP0, BP1, CP0, ... CP9, IOC0, IOC1, ...), qui traitent des ordres instantanés de commutation respectivement différents, sont raccordés en parallèle à un système de bus central (B:CMY0, B:CMY1),

* les informations mémorisées en parallèle dans les blocs de chaque couple (par exemple MB3a/MB3b) de blocs de mémoire, sont mémorisées en soi dans chaque bloc de mémoire, en étant protégées contre les erreurs, selon un code EDC, par des circuits EDC de mémoire (M:EDC0a...M:EDC3b) associés individuellement aux différents blocs de mémoire,

* au moins un nombre élevé des processeurs centraux (BP0... IOC1...) ont accès à respectivement au moins l'une des sections de mémoire -qui mémorisent normalement des informations identiques- dans chacun des deux blocs de mémoire d'au moins l'un des couples de blocs de mémoire (par exemple MB3a/MB3b) pour une opération de lecture/d'enregistrement, et

* pendant les durées de fonctionnement particulier d'un couple de blocs de mémoire (par exemple MB3a/MB3b,

    # c'est-à-dire après qu'une erreur multiple déterminée par l'un des circuits EDC de mémoire (par exemple M:EDC3b) et qui n'est plus corrigible par ce circuit EDC, dans un bloc de mémoire dénommé second bloc de mémoire (par exemple MB3b) d'un tel couple de blocs de mémoire (MB3a/MB3b),

    - le second bloc de mémoire (MB3b) est déconnecté du système de bus (B:CMY0/B:CMY1) au moyen d'une configuration automatique de mémoire, et ensuite l'autre bloc de mémoire, à savoir le premier bloc de mémoire (MB3a), de ce couple de blocs de mémoire (MB3a/MB3b) exécute seul l'opération de lecture/d'enregistrement avec les processeurs centraux considérés (BP0...IOC1),

    - pendant l'état de déconnexion, les informations mémorisées dans le second bloc de mémoire (MB3b) sont corrigées petit à petit par

    # un essai de nouveau chargement réalisé à l'aide d'un générateur d'adresses et exécuté d'une manière entièrement automatique éventuellement déjà juste après la déconnexion du second bloc de mémoire (MB3b), mais automatiquement au moins au plus tard après une réparation du second bloc de mémoire (MB3b) après une impulsion de déclenchement,

    # à savoir par lecture à partir du premier bloc de mémoire (MB3a) de chaque couple de blocs de mémoire (MB3a/MB3b) et par enregistrement des informations, lues à partir du premier bloc de mémoire (MB3b) dans ce second bloc de mémoire (MB3b), dans la mesure où alors le second bloc de mémoire (MB3b) travaille à nouveau sans erreur,
- auquel cas, lorsque pendant ce nouveau chargement, exécuté petit-à-petit, du second bloc de mémoire (MB3b), une opération d'enregistrement du premier bloc de mémoire (MB3b) est simultanément exécutée d'une manière intercalée, la même information, qui est enregistrée dans le premier bloc de mémoire (MB3b), est enregistrée immédiatement à la même adresse également dans le second bloc de mémoire (MB3b),

caractérisé par le fait que
* pour la configuration automatique de la mémoire, au moins un seul couple de processeurs de configurations de mémoire (SpP0/SpP1), qui est propre à la mémoire et fonctionne respectivement en parallèle d'une manière microsynchrone - également indépendamment d'un certain glissement éventuellement toléré-,
- et dont le fonctionnement est également contrôlé en soi à l'aide d'un circuit particulier à code EDC du processeur ou à bit de parité du processeur (EDC0, EDC1), et
- dont le fonctionnement est contrôlé en permanence, en dépit de ce contrôle particulier du code EDC ou du bit de parité, à l'aide d'un
  # circuit comparateur de processeurs (VP) qui compare les instructions machine individuelles et/ou les résultats de traitement individuels des processeurs associés de configuration de mémoire (SpP0/SpP1), est raccordé directement à la mémoire centrale principale (CMY), sans passer par l'intermédiaire du système de bus central (B:CMY0/B:CMY1).

2. Procédé de fonctionnement de configuration de mémoire pour une unité de commande centrale suivant la revendication 1, caractérisé par le fait que
* chaque fois que le couple considéré de processeurs de configuration de mémoire (SpP0/SpP1) -ou les couples de processeurs de configuration de mémoire-travaille parfaitement et conformément à ses contrôles propres (VP, EDC0/EDC1), ce couple de processeurs de configuration de mémoire
- déclenche les cycles de régénération des blocs de mémoire (MB0a...MB0b),
- permet et/ou exécute, pendant les cycles de régénération, des contrôles et des corrections des informations mémorisées lues pendant le cycle de régénération, à l'aide du code EDC (M:EDC0a...M:EDC3b),
- après une erreur multiple déterminée par l'un des circuits EDC de mémoire (par exemple M:EDC3b) d'un bloc de mémoire (alors MB3b) et qui ne peut plus être corrigée par ce circuit, dans le bloc de mémoire considéré (MB3b), déconnecte ce bloc de mémoire (MB3b) du système de bus (B:CMY0/B:CMY1) et déclenche et/ou exécute le fonctionnement particulier pour des essais de nouveaux chargements pour réaliser le nouveau chargement de ce bloc de mémoire déconnecté (MB3b), et
- à la fin du nouveau chargement du bloc de mémoire considéré (MB3b), raccorde à nouveau ledit bloc de mémoire au système de bus (B:CMY0/B:CMY1) et déclenche et/ou exécute le fonctionnement en parallèle microsynchrone des deux blocs de mémoire du couple considéré de blocs de mémoire (MB3a/MB3b), c'est-à-dire le passage à la durée de fonctionnement normale.

3. Procédé suivant la revendication 2, caractérisé par le fait que
* au moins l'un des processeurs de configuration de mémoire (SpP0/SpP1) consigne dans une zone particulière de mémoire (par exemple dans MB0a/MB0b) respectivement une indication concernant
- l'erreur sur laquelle est basée la déconnexion par rapport au système de bus (B:CMY0/B:CMY1),
- ainsi que le bloc de mémoire déconnecté (MB3b),
- éventuellement également, d'une manière plus ou moins précise, l'adresse à laquelle l'erreur considérée a été déterminée.

4. Procédé suivant la revendication 2 ou 3, caractérisé par le fait que pendant les durées de fonctionnement normal, au moins lors de la lecture ou de la régénération,

* les informations mémorisées dans les deux blocs de mémoire d'un couple de blocs de mémoire (par exemple MB3a/MB3b) sont comparées de façon supplémentaire entre elles dans un circuit comparateur de mémoire (V0...V3), en dépit du contrôle EDC exécuté lors de la lecture et/ou de la régénération, et

* en cas d'inégalité entre les informations comparées, l'opération considérée dans la mémoire, c'est-à-dire par exemple la lecture, est répétée.

5. Procédé suivant la revendication 4, caractérisé par le fait qu'après une apparition réitérée de l'inégalité

* le couple considéré de processeurs de configuration de mémoire (SpP0/SpP1) déclenche une alarme, par exemple le couple considéré de blocs de mémoire est déconnecté du système de bus central (B:CMY0/B:CMY1) et est remplacé par un couple de blocs de mémoire de remplacement.

6. Procédé suivant l'une des revendications 2 à 5, caractérisé par le fait qu'après une erreur qui est déterminée par l'un des circuits EDC de processeurs (par exemple EDC1) ou par le circuit de bit de parité des processeurs et qui ne peut plus être corrigée par ce circuit

* le processeur associé de configuration de mémoire (par exemple SpP1) est déconnecté, et

* d'autres processeurs de configuration de mémoire (SpP0) du couple considéré de processeurs de configuration de mémoire (SpP0/SpP1) prend en charge à lui-seul la configuration de mémoire.

7. Procédé suivant l'une des revendications 2 à 5, caractérisé par le fait qu'après une erreur qui est déterminée par l'un des circuits EDC des processeurs (par exemple EDC1) ou par un circuit de bits de parité des processeurs et ne peut plus être corrigé par le circuit,

* le couple considéré de processeurs de configuration de mémoire (SpP0/SpP1) est déconnecté et est remplacé par le branchement d'un couple de processeurs de configuration de mémoire de remplacement.

8. Procédé suivant l'une des revendications 2 à 7, caractérisé par le fait qu'après la détermination d'une erreur par un circuit comparateur à processeurs (VP)

- éventuellement en dépit d'une correction par un circuit EDC de processeurs (par exemple EDC1) qui fait partie de ce couple de processeurs de configuration de mémoire (SpP0/SpP1),

* le couple associé de processeurs de configuration de mémoire (SpP0/SpP1) est déconnecté (par exemple au moyen de Sc) et est remplacé au moyen du branchement d'un couple de processeurs de configuration de mémoire de remplacement.

9. Procédé suivant l'une des revendications 2 à 8, caractérisé par le fait que

* le couple considéré de processeurs de configuration de mémoire (SpP0/SpP1) déclenche et/ou exécute en supplément, pendant des intervalles de temps, l'appel et l'élaboration d'un programme particulier de contrôle, mémorisé dans une zone particulière de mémoire (par exemple dans MB0a/MB0b) pour un test de circuits utilisés pour l'identification d'erreurs,

- par exemple pour un test des circuits EDC de mémoire (M:EDC) et/ou des circuits EDC de processeurs (EDC0/EDC1) et/ou des circuits comparateurs de mémoire (V0...V3) et/ou du circuit comparateur de processeurs (VP).